(19) Europäisches Patentamt
European Patent Office
Office européen des brevets

(11) Numéro de publication : 0 440 520 A1

(12) DEMANDE DE BREVET EUROPEEN

(21) Numéro de dépôt : 91400125.0

(22) Date de dépôt : 21.01.91

(51) Int. Cl.[5] : C08G 77/60, C04B 35/56, C04B 35/58, C01B 31/36, D01F 9/10

(30) Priorité : 01.02.90 FR 9001383

(43) Date de publication de la demande : 07.08.91 Bulletin 91/32

(84) Etats contractants désignés : AT BE CH DE DK ES FR GB GR IT LI LU NL SE

(71) Demandeur : RHONE-POULENC CHIMIE
25, quai Paul Doumer
F-92408 Courbevoie Cédex (FR)

(72) Inventeur : Ardaud, Pierre
133, avenue Georges Clémenceau
F-69110 Sainte Foy Les Lyon (FR)
Inventeur : Charpenel, Maurice
10, rue Louis Thévenet
F-69004 Lyon (FR)
Inventeur : Mignani, Gérard
2, avenue des Frères Lumière
F-69008 Lyon (FR)
Inventeur : Soula, Gérard
33, rue Nungesser
F-69330 Meyzieu (FR)

(74) Mandataire : Dubruc, Philippe et al
RHONE-POULENC CHIMIE Service Brevets Chimie 25, quai Paul-Doumer
F-92408 Courbevoie Cédex (FR)

# (54) Procédé de préparation de polycarbosilanes en présence de sodium métallique fondu et d'agents séquestrants.

(57) La présente invention concerne un procédé de préparation de polycarbosilanes par réaction d'au moins deux silanes monomères de formules : $R^1R^2SiCl_2$ (1) et $(R^1)_3SiCl$ (2) dans lesquelles $R^1$ identique ou différent représente l'atome d'hydrogène ou un radical hydrocarboné, $R^2$ est le radical vinyle.

Ce procédé est mis en oeuvre en présence de sodium métal fondu dans un solvant organique et d'agents séquestrants, de telle sorte que le rapport $r_1$ du nombre de moles d'agents séquestrants sur le nombre de moles de sodium soit compris entre 0,001 et 1.

L'invention concerne aussi un produit céramique à base de carbure ou carbonitrure de silicium susceptible d'être obtenu selon ce procédé.

EP 0 440 520 A1

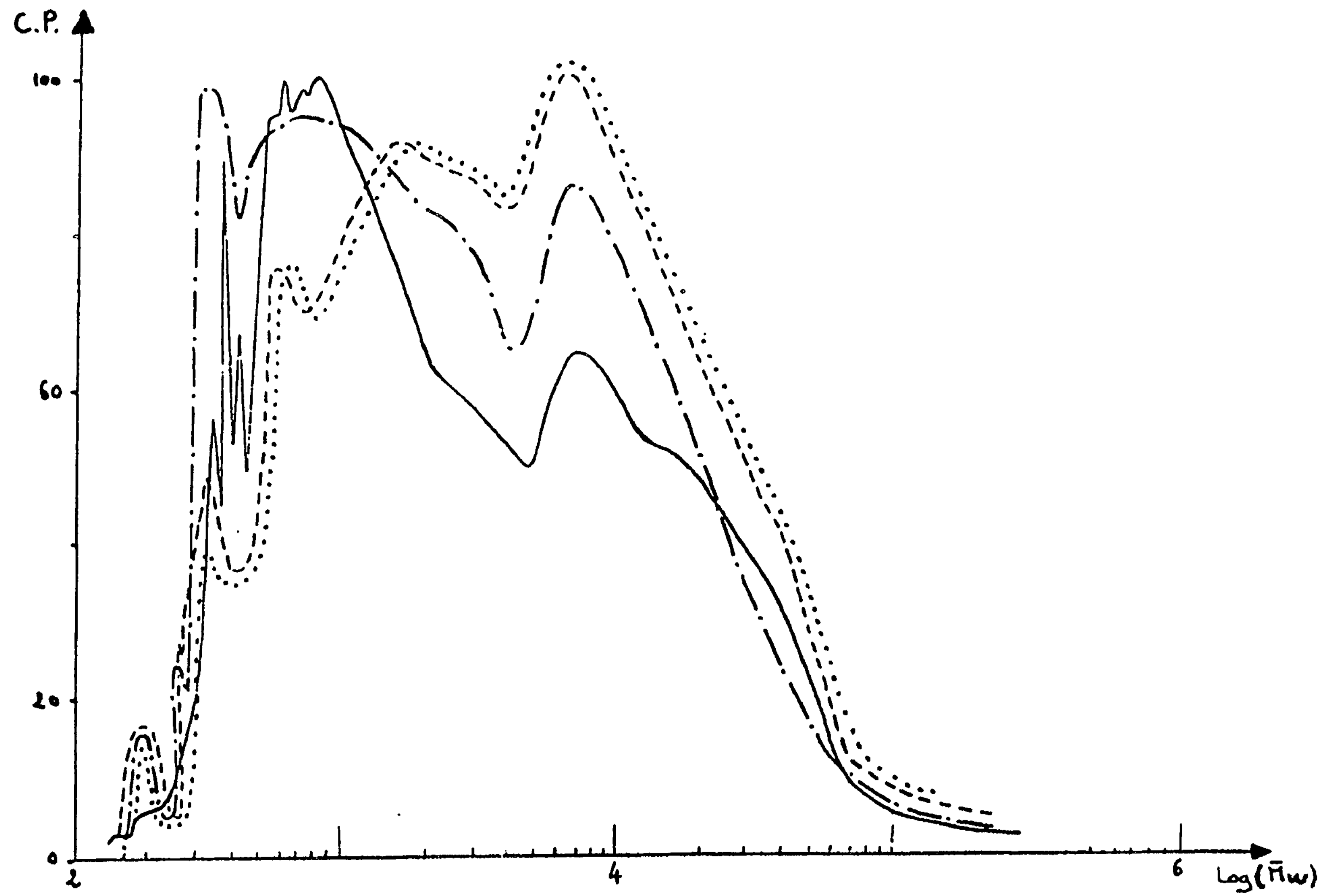

C.P.
100
60
20
0
2
4
6
Log($\bar{M}w$)

# PROCEDE DE PREPARATION DE POLYCARBOSILANES EN PRESENCE DE SODIUM METALLIQUE FONDU ET D'AGENTS SEQUESTRANTS

La présente invention concerne un procédé de préparation de polycarbosilanes en faisant réagir différents halogénosilanes monomères spécifiques en présence de sodium métallique fondu et d'agents séquestrants.

Elle concerne également, à titre d'application, l'utilisation de ces polycarbosilanes pour la préparation de matériaux céramiques notamment sous forme de fibres, de pellicules, de matrices, de revêtements.

Divers procédés de préparation de polycarbosilanes ont déja été décrits.

On connaît ainsi par le brevet US 4 052 430, le procédé de préparation de polycarbosilanes, en passant par la synthèse de polysilanes avec comme produits de départ des dialkyldichlorosilanes en présence de métal alcalin fondu.

Cependant un tel procédé présente des inconvénients sur le plan de sa mise en oeuvre et ne donne pas la possibilité de contrôler la réticulation du polycarbosilane obtenu. En effet, le passage du polysilane au polycarbosilane s'effectue par une étape de chauffage aux environs de 400°C sous pression qui ne permet pas de maîtriser la structure du polycarbosilane obtenu.

Selon le brevet EP-B-0 052 694, des halogénosilanes monomères non hydrogénés éventuellement porteurs de groupements éthyléniques sont mis en présence de métal alcalin, et plus particulièrement de potassium du fait de sa grande réactivité sur les halogénosilanes et de sa basse température de fusion par rapport aux autres métaux alcalins, tels que notamment le sodium, le lithium.

Selon les brevets EP-B-0 123 162 et EP-B- 0 123 934, on fait réagir des halogénosilanes monomères éventuellement porteurs de groupements éthyléniques mis en présence de métal alcalin, et plus particulièrement de potassium, de sodium ou du mélange des deux.

Les seules possibilités, dans ces trois brevets, pour contrôler le caractère plus ou moins ramifié des polymères obtenus sont soit de faire varier en quantité les différents types de halogénosilanes monomères porteurs de groupements éthyléniques ou d'atomes d'hydrogène liés aux atomes de silicium ; soit d'utiliser des métaux alcalins différents à savoir : le potassium pour obtenir majoritairement un polymère linéaire et le sodium pour obtenir majoritairement un polymère ramifié. Le brevet EP-B-0 123 934 enseigne que le sodium, dans certaines conditions, n'attaque pratiquement pas les groupes éthyléniques des silanes monomères halogénés introduits. Dans ce cas, le polymère obtenu, selon EP-B-0 123 934 qui utilise de préférence le sodium, est un polysilane alors que celui obtenu, selon EP-B-0 123 162, qui utilise de préférence le potassium, est plutôt un polycarbosilane.

La demande de brevet DE-A-3 841 598 décrit un procédé de préparation de polysilanes en faisant réagir des dihalogénosilanes avec du sodium en présence d'éther-couronnes. Les silanes introduits ne sont pas porteurs de radicaux vinyls (voir les exemples) et, par conséquent, les polysilanes obtenus ne peuvent être transformés en polycarbosilanes que par une étape ultérieure de chauffage qui ne permet pas de maîtriser la structure du polycarbosilane obtenu.

Un but de l'invention est de proposer un procédé de préparation de polycarbosilanes en une étape.

Un autre but de l'invention est d'avoir la possibilité de faire varier de façon contrôlée le taux de réticulation dans le polycarbosilane obtenu.

Un autre but est de proposer un procédé de préparation de polycarbosilanes de mise en oeuvre aisée et économique et permettant d'homogénéiser et d'augmenter les masses moléculaires des polymères obtenus.

Ces buts, et d'autres, sont atteints par la présente invention qui concerne en effet un procédé de préparation de polycarbosilanes par réaction d'au moins un de chacun des deux silanes monomères de formules :

$$R^1R^2\,SiCl_2 \quad (1)$$

$$R^1_3SiCl \quad (2)$$

dans lesquelles $R^1$ identique ou différent représente l'atome d'hydrogène ou un radical hydrocarboné, $R^2$ est le radical vinyle, procédé caractérisé en ce que il est mis en oeuvre en présence de métal sodium fondu dans un solvant organique et d'agents séquestrants de telle sorte que le rapport $r_1$ du nombre de moles d'agents séquestrants sur le nombre de moles de sodium soit compris entre 0,001 et 1 et de préférence entre 0,01 et 0,05.

Suivant ce procédé de préparation de polycarbosilanes ramifiés, le fait de coupler le métal sodium avec au moins un agent séquestrant permet de se rapprocher de la grande réactivité du métal potassium vis-à-vis des silanes monomères vinylés, tout en évitant les inconvénients du potassium ; c'est-à-dire sa mise en oeuvre industrielle difficile et son coût élevé.

Ainsi, en faisant varier le temps de la réaction et/ou le rapport molaire $r_1$ défini ci-dessus, le nombre d'atomes de carbone présents dans l'enchaînement du polymère obtenu est modifié : la réactivité du couple métal sodium - agents séquestrants peut être modulée à volonté entre la réactivité du métal sodium et celle du métal

potassium.

La Demanderesse a pu constaster que, de façon totalement inattendue, les différents polymères obtenus par un tel procédé avaient une température de transition vitreuse (Tg) qui augmentait avec le rapport molaire $r_1$ tel que défini ci-dessus. L'augmentation de la température de transition vitreuse des polymères obtenus permet de dire que les polymères se structurent autrement, se réticulent et cette réticulation donne un meilleur rendement en céramique.

Les agents séquestrants sont de préférence choisis parmi les composés complexants de formule :

$$N-\{-CHR^3-CHR^3-O(CHR^3-CHR^3-O)_n-R^4\}_3 \quad (3)$$

dans laquelle n est un nombre entier compris entre 0 et 10 inclus, $R^3$ identique ou différent est choisi parmi un atome d'hydrogène et un radical alkyle en $C_1$-$C_4$ et $R^4$ est un radical choisi parmi un radical alkyle ou cycloalkyle en $C_1$-$C_{12}$, un radical alkylphényle ou phénylalkyle dont la partie alkyle est en $C_1$-$C_{12}$.

Les agents séquestrants sont aussi choisis parmi les polyéthers macrocycliques (encore nommés éthers couronnes) ayant de 15 à 30 atomes dans leur cycle et constitués de 4 à 10 unités -O-X dans lesquelles X est soit $-CHR^5-CHR^5$, soit $-CHR^5-CHR^5-C(R^6)_2$, $R^5$ et $R^6$ identiques ou différents étant un atome d'hydrogène ou un radical alkyle ayant de 1 à 4 atomes de carbone, un des X pouvant être $-CHR^5-CHR^5-C(R^6)_2$ quand les unités -O-X comprennent le groupement $-O-(CHR^5)_2$.

Les agents séquestrants sont aussi choisis parmi les composés macrocycliques ou bicycliques (encore nommés "Cryptants") de formule générale (5) ou (6).

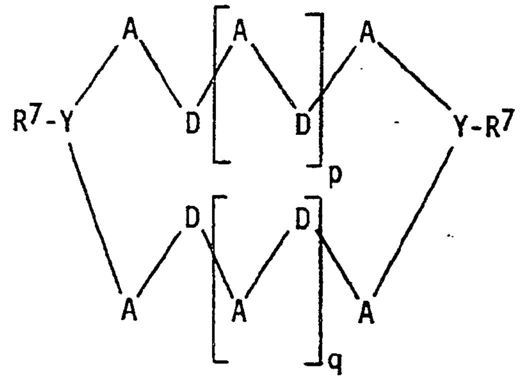

(5)

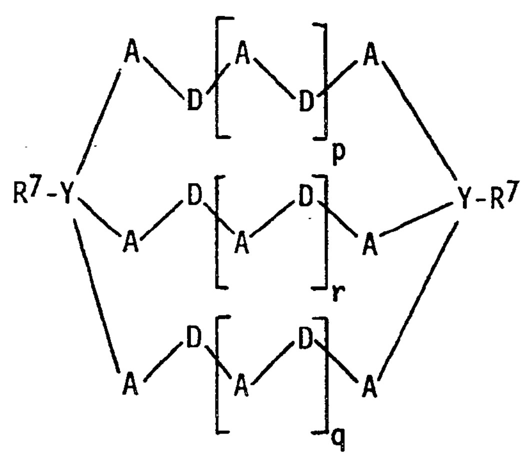

(6)

dans lesquelles :

– Y représente N ou P

– A représente un groupement alkylène ayant de 1 à 3 atomes de carbone

– D représente O, S ou N-$R^8$ où $R^8$ représente un radical alkyle ayant de 1 à 6 atomes de carbone

– $R^7$ représente un radical alkyle ayant de 1 à 6 atomes de carbone, p, q et r identiques ou différents sont des nombres entiers compris entre 1 et 5.

Les agents séquestrants sont aussi choisis parmi les composés cycliques azotés, nommés cyclames tels que et utilisé préférentiellement,
le composé 1,4,8,11-tétraméthyl 1,4,8,11-tétraazacyclotétradécane, nommé ultérieurement composé (A), de formule :

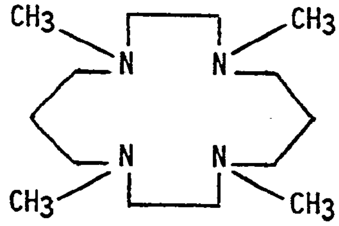

Les agents complexants de formule (3) sont des produits bien connus, notamment décrits dans les brevets français 1 302 365 et 2 450 120 cités comme références.

Selon un mode de réalisation préférentiel de l'invention, on utilise un agent séquestrant de formule (3) dans laquelle $R^3$ représente un atome d'hydrogène ou un radical méthyle, $R^4$ et n ayant la signification précédente.

Parmi ces derniers, on préfère encore plus particulièrement mettre en oeuvre les agents séquestrants pour lesquels n est supérieur ou égal à 0 et inférieur ou égal à 6 et pour lesquels $R^4$ représente un radical alkyle ayant de 1 à 4 atomes de carbone.

On peut citer :

- la tris(oxa-3 butyl)amine de formule : $N(CH_2\text{-}CH_2\text{-}0\text{-}CH_3)_3$
- la tris(dioxa-3,6 heptyl)amine de formule : $N\text{-}(CH_2\text{-}CH_2\text{-}O\text{-}CH_2\text{-}CH_2\text{-}0\text{-}CH_3)_3$ (nommé par la suite "$TDA_1$")
- la tris(trioxa-3, 6, 9 décyl)amine de formule : $N(CH_2\text{-}CH_2\text{-}0\text{-}CH_2\text{-}CH_2\text{-}0\text{-}CH_2\text{-}CH_2\text{-}0CH_3)_3$
- la tris(dioxa-3,6 octyl)amine de formule : $N(CH_2\text{-}CH_2\text{-}O\text{-}CH_2\text{-}CH_2\text{-}O\text{-}C_2H_5)_3$
- la tris(trioxa-3, 6, 9 undécyl)amine de formule : $N\text{-}(CH_2\text{-}CH_2\text{-}O\text{-}CH_2\text{-}CH_2\text{-}O\text{-}CH_2\text{-}CH_2\text{-}O\text{-}C_2H_5)_3$
- la tris(dioxa-3,6 nonyl)amine de formule : $N\text{-}(CH_2\text{-}CH_2\text{-}O\text{-}CH_2\text{-}CH_2\text{-}O\text{-}C_3H_7)_3$
- la tris(trioxa-3, 6,9 dodécyl)amine de formule : $N\text{-}(CH_2\text{-}CH_2\text{-}O\text{-}CH_2\text{-}CH_2\text{-}O\text{-}CH_{2\text{-}CH2}\text{-}O\text{-}C_3H_7)_3$
- la tris(dioxa-3,6 décyl)amine de formule : $N\text{-}(CH_2\text{-}CH_2\text{-}O\text{-}CH_2\text{-}CH_2\text{-}O\text{-}C_4H_9)_3$
- la tris(trioxa-3,6,9 tridécyl)amine de formule : $N\text{-}(CH_2\text{-}CH_2\text{-}O\text{-}CH_2\text{-}CH_2\text{-}O\text{-}CH_2\text{-}CH_2\text{-}O\text{-}C_4H_9)_3$
- la tris(tetra-oxa-3, 6, 9, 12 tridécyle)amine de formule : $N\text{-}(CH_2\text{-}CH_2\text{-}O\text{-}(\text{-}CH_2\text{-}CH_2\text{-}O)_3\text{-}CH_3)_3$
- la tris(hexa-oxa-3, 6, 9, 12, 15, 18 nonadecyl)amine de formule : $N\text{-}(CH_2\text{-}CH_2\text{-}O\text{-}(CH_2\text{-}CH_2\text{-}O\text{-})_5\ CH_3)_3$
- la tris(dioxa-3,6 méthyl-4 heptyl)amine de formule : $N\text{-}(CH_2\text{-}CH_2\text{-}OCH\text{-}(CH_3)\text{-}CH_2\text{-}O\text{-}CH_3)_3$
- la tris(dioxa-3,6 diméthyl-2,4 heptyl)amine de formule : $N\text{-}(CH_2CH\text{-}(CH_3)\text{-}OCH(CH_3)\text{-}CH_2\text{-}O\text{-}CH_3)_3$

Parmi ceux-ci, on préfère encore plus particulièrement la tris(dioxa-3,6 heptyl)amine.

Les éthers couronnes sont décrits dans le brevet français 69/43 879 publié sous le numéro 2 026 481, parmi ceux-ci on peut citer, comme exemples, les composés de formules :

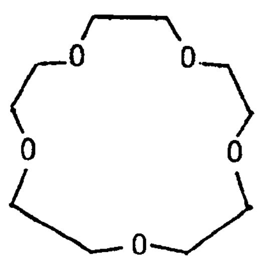

(a)

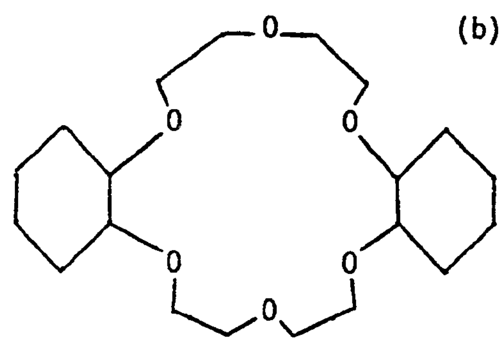

(b)

(c)

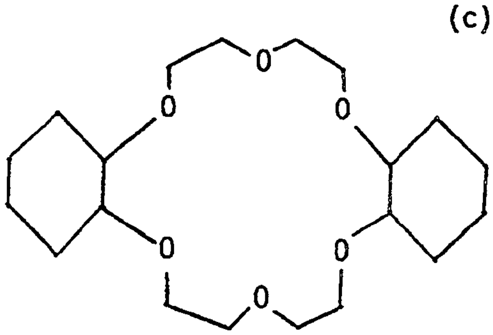

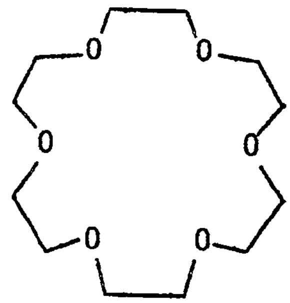

(d)

L'éther couronne utilisé préférentiellement est le "15 Crown 5" : formule (a), car il est spécifique de la complexation des ions $Na^+$.

Les composés macrocycliques et bicycliques sont décrits dans le brevet français 70 21 079 publié sous le numéro 2 052 947. On peut citer, comme exemples de tels composés concernant la mise en oeuvre du procédé selon l'invention :

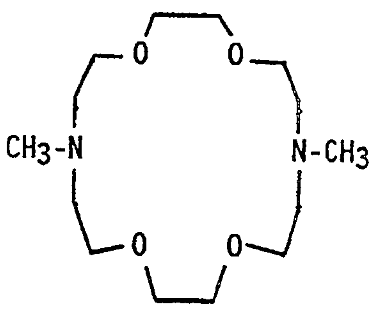

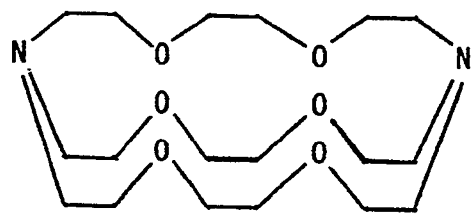

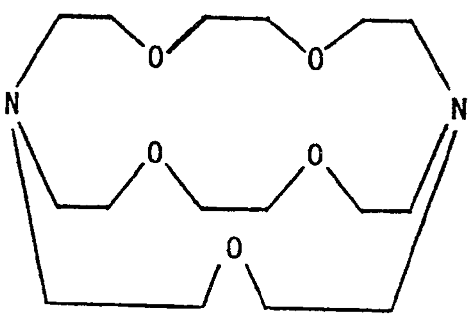

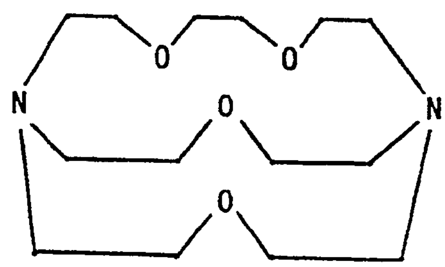

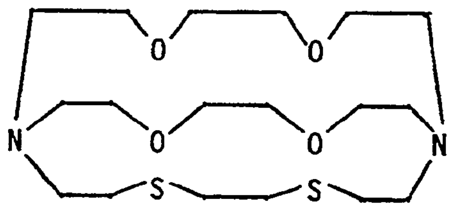

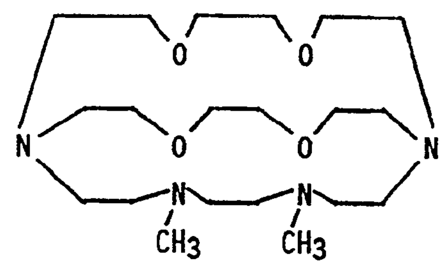

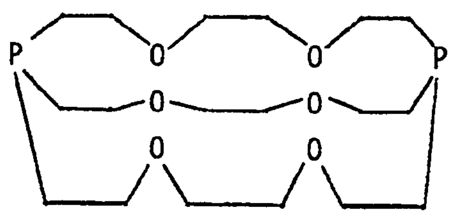

Bien entendu, il est possible de faire réagir d'autres chlorosilanes monomères avec ceux de formules (1) et (2).

Ainsi, et selon un mode préféré, le procédé est mis en oeuvre, avec à titre de troisième réactif, au moins un chlorosilane monomère de formule générale : (4) $R^1$ H $SiCl_2$, $R^1$ ayant la signification donnée auparavant.

Selon un mode encore plus préféré de l'invention, le procédé est mis en oeuvre avec à titre de quatrième réactif, au moins un chlorosilane monomère de formule générale (7) : $R^1R^9$ $SiCl_2$, dans laquelle $R^1$ a la signification donnée auparavant, $R^9$ identique ou différent représente un radical alkyle, un radical cycloalkyle, un radical aryle, tel que le radical phényle et naphtyle, un radical arylalkyle ou alkylaryle.

On utilise, de préférence, un chlorosilane monomère de formume (7) dans laquelle $R^9$ représente un radical alkyle en $C_3$-$C_6$, le radical cyclohexyle ou le radical phényle.

Et, de préférence, le rapport $r_2$, correspondant au nombre de moles de chlorosilanes de formule (1) sur le nombre de moles d'hydrogénochlorosilanes de formule (4), est compris entre 0,5 et 4 et le rapport $r_3$, correspondant au nombre de moles de monochlorosilanes introduits sur le nombre de moles de dichlorosilanes introduits, est compris entre 0,2 et 0,8 environ.

Les monochlorosilanes correspondent aux chlorosilanes monomères possédant, par molécule, un atome de chlore lié à l'atome de silicium, tels que ceux de formule (2). Les dichlorosilanes correspondent aux chlorosilanes monomères possédant, par molécule, deux atomes de chlore liés à l'atome de silicium, tels que ceux de formules (1), (4) et (7).

Selon un mode particulier et préféré de l'invention $R^1$, dans chacune des formules des chlorosilanes monomères introduits, représente le radical méthyle.

Le métal sodium est de préférence en léger excès molaire (1 à 10 % en excès molaire) par rapport aux groupes chlorosilanes afin que tous les atomes de chlore présents dans les silanes monomères réagissent.

Le métal sodium est introduit dans la réaction sous des formes variées, comme par exemple, et à titre non limitatif : poudre cylindre, pastille, morceau, fil. Après fusion, le sodium fondu est sous forme de fines gouttelettes.

La température de la réaction doit être maintenue, sur une durée pouvant aller de quelques minutes à plusieurs heures, au-dessus de la température de fusion du métal sodium (c'est-à-dire 98°C) et, de préférence, maintenue à la température de reflux du solvant utilisé.

La température de la réaction peut donc être modifiée en fonction du solvant utilisé. Le solvant utilisé doit être aprotique et apolaire, comme par exemple : le toluène, le xylène et le benzène, ainsi que leur mélange. Le solvant utilisé, de préférence, est le toluène.

On opère de préférence à la pression atmosphérique sous atmosphère inerte. Bien entendu, des pressions supérieures ou inférieures à la pression atmosphérique ne sont pas exclues.

A l'issue de cette réaction, on sépare le polycarbosilane du milieu réactionnel, et ceci par tout moyen connu en soi, tel que notamment par filtration.

Ainsi, de préférence, le mélange réactionnel refroidi, contenant principalement du polycarbosilane, du sodium résiduel, des agents séquestrants, le chlorure de sodium et le solvant, est filtré. La phase solide obtenue est traitée par addition d'eau ou d'alcool pour oxyder le sodium résiduel. Pour séparer dans la phase liquide

le polycarbosilane des autres produits, notamment des agents séquestrants et éventuellement des chlorosilanes monomères qui n'ont pas réagi, la solution de cette phase est lavée à l'eau puis filtrée.

La séparation par filtration préalable à l'oxydation du sodium résiduel permet d'éviter l'oxydation des polycarbosilanes et d'obtenir ainsi des polycarbosilanes à l'état liquide qui sont thermodurcissables.

Il peut être avantageux, pour mieux structurer le polymère formé et augmenter ainsi les rendements de la pyrolyse, de chauffer le polymère à des températures comprises entre 150°C et 400°C. Il a été, de façon avantageuse, constaté que cette réticulation se fait avec une très faible perte de masse.

A l'exception des polymères ayant subi une étape ultérieure de thermolyse, les polymères selon l'invention sont fusibles et solubles dans la plupart des solvants organiques usuels, ce qui peut être très avantageux au niveau de leur possibilité de mise en forme.

Dans le cas le plus général, on pyrolyse le polymère obtenu dans une atmosphère inerte ou réductrice ou sous vide à une température allant de 100°C à 2 000°C jusqu'à ce que le polymère soit converti en une céramique à base de carbure ou de carbonitrure de silicium, la céramique à base de carbonitrure de silicium étant obtenue par pyrolyse sous atmosphère d'ammoniac du polymère obtenu par le procédé objet de la présente invention.

Le polymère, avant pyrolyse, peut également être mis en forme, par moulage ou par filage par exemple, pour aboutir finalement aux configurations les plus diverses telles que filaments, fibres, articles moulés, revêtements de support et autres.

Dans le cas où l'on désire obtenir des fibres, le polymère est filé au moyen d'une filière classique (après fusion éventuelle si le polymère est initialement à l'état solide), puis est traité thermiquement à une température allant de 100°C à 2 000°C sous vide ou sous atmosphère inerte ou réductrice, pour donner une fibre céramique.

Des exemples illustrant les divers aspects de l'invention sans en limiter la portée vont maintenant être donnés.

Dans ces exemples :

Me est le radical méthyle,
Vi est le radical vinyle,
Ø est le radical phényle,
nBu est le radical n.butyle,
$\overline{Mn}$ est la masse moléculaire moyenne en nombre,
$\overline{Mw}$ est la masse moléculaire moyenne en poids ,
Ip est l'indice de polydispersité,
GPC est la chromatographie par perméation de gel (étalonnage polystyrène).
Tg : température de transition vitreuse (degré celsius) est obtenue par l'expérience du pendule à fibre.

Les rapports sont molaires.

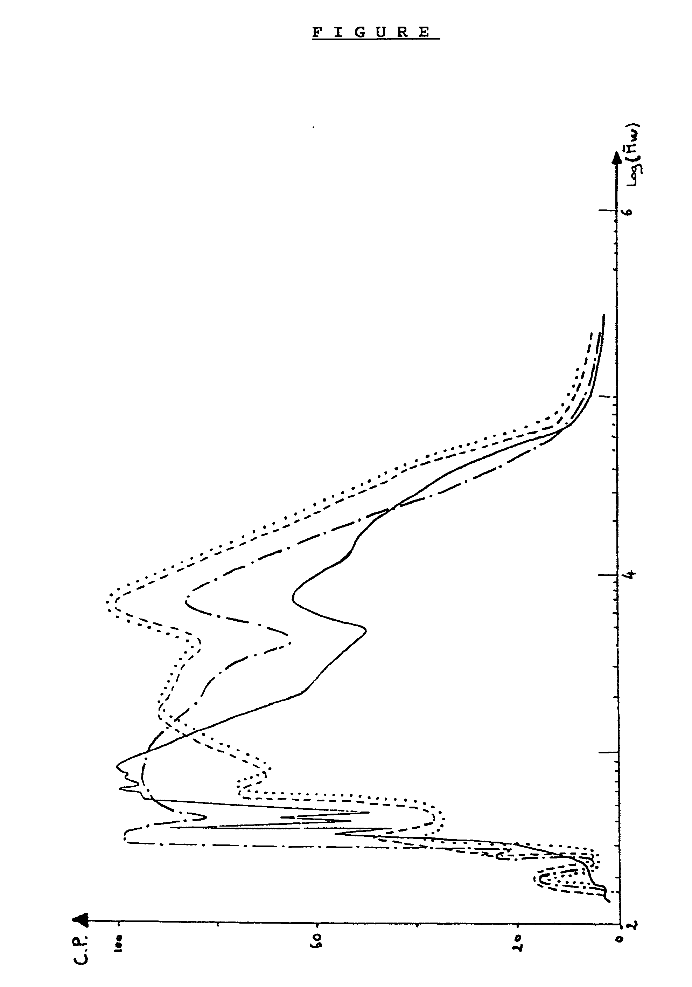

Référence sera faite à la figure annexée qui représente par analyses GPC l'évolution du cumul pondéral (CP) en fonction du log (Mw) des différents polymères obtenus dans les exemples 1 à 4, respectivement représentés par les courbes : —— ; — — ; — ; .....

## EXEMPLE COMPARATIF 1 :

Dans un réacteur en verre de 1 litre, maintenu sous atmosphère inerte ($N_2$), muni d'une agitation mécanique, d'un réfrigérant à eau, d'un thermomètre et chauffé par bain d'huile, on introduit un mélange de 170 g de toluène sec et de 70 g de dioxane sec. 1,78 mole de sodium (41 g), préalablement coupé en petits morceaux et lavé plusieurs fois au toluène sec, est ajouté dans le réacteur. L'agitation est augmentée lors de la fusion du sodium pour assurer une bonne dispersion du métal sous forme de fines gouttelettes puis le mélange suivant est additionné dans le solvant au reflux :

$$\left.\begin{array}{ll} MeHSiCl_2 & : 0,17 \text{ mole} \\ MeViSiCl_2 & : 0,54 \text{ mole} \\ Me_3SiCl & : 0,29 \text{ mole} \end{array}\right] \quad r_2 = 3,18 \ ; \ r_3 = 0,41$$

la vitesse d'addition est faible à cause de la forte exothermicité de la réaction (durée d'addition : 2 heures pour 125 ml de chlorosilanes).

En fin d'addition, le mélange réactionnel est laissé à reflux pendant 2 heures puis refroidi et filtré sous atmosphère inerte. Le précipité est lavé avec 200 ml de toluène et le filtrat est lavé deux fois avec 25 ml d'eau puis décanté et séché sur $MgSO_4$.

Après évaporation du solvant, on obtient 37,7 g de polymère qui se présente sous la forme d'une huile visqueuse jaune pâle.

EXEMPLES 2 à 4 :

On répète exactement le mode opératoire de l'exemple comparatif 1, sauf que l'on introduit à la place du dioxane sec du tris(dioxa-3,6 heptyl)amine nommé $TDA_1$.

Les données et les résultats obtenus dans les exemples 1 à 4 sont rassemblés dans le tableau et la courbe GPC, ci-après :

| Exemple | 1 | 2 | 3 | 4 |
|---|---|---|---|---|
| $r_1$ | 0 | 0,011 | 0,022 | 0,033 |
| Tg | - 72 | + 5 | + 30 | + 31 |
| $r'_2$ | 3,6 | 1,6 | 0,26 | 0,24 |
| masse du polymère obtenu (g) | 37,7 | 32,9 | 31,25 | 36,5 |

$r'_2$ est le rapport du nombre de moles de motifs ≡Si-Vi sur le nombre de moles de motifs ≡Si-H présents dans le polymère obtenu après réaction, analyses ayant été faites par $^1H$ NMR et par $^{29}Si$ NMR.

On observe, quand $r_1$ augmente et $r_2$ est constant :
- réticulation du polymère (Tg augmente).
- insertion d'atomes de carbone dans l'enchaînement du polymère obtenu ($r'_2$ diminue),
- homogénéisation et augmentation des masses moléculaires du polymère obtenu.

EXEMPLE 5 :

Le mode opératoire est identique à celui de l'exemple comparatif 1, sauf que l'on introduit à la place du dioxane du $TDA_1$.

Les quantités des produits sont :

$MeViSiCl_2$ : 0,111 mole
$MeHSiCl_2$ : 0,0339 mole   $r_2 = 3,27$ ; $r_3 = 0,38$

$Me_3SiCl$ : 0,0558 mole
41,2.$10^{-2}$ mole de métal sodium
0,01 mole de $TDA_1$.
$r_1 = 0,02$
durée de reflux est égale à 3 heures.

On obtient 6,1 g d'un semi-solide qui a comme caractéristiques :
$\overline{Mn} = 1360$
$\overline{Mw} = 6120$
Ip = 4,5
Tg = + 28°C
rendement TGA (850°C, hélium) = 44 %.

Par analyses $^1$HRMN, on distingue les motifs ≡SiH (16 % molaire), mais on ne distingue plus les motifs ≡SiVi.

EXEMPLE 6 :

Dans un tricol de 250 ml, maintenu sous atmosphère d'azote, muni d'une agitation mécanique, d'un réfrigérant à eau, d'un thermomètre et chauffé par bain d'huile, on introduit de la même façon que dans l'exemple comparatif 1 :

| | | |
|---|---|---|
| $MeHSiCl_2$ : 0,0565 mole | ┐ | $r_2$ = 3,26 |
| $MeViSiCl_2$ : 0,184 mole | ┘ | |

$Me_3SiCl$ : 0,093 mole

| | | |
|---|---|---|
| 0,596 mole de sodium | ┐ | $r_1$ = 0,011 |
| $6{,}59.10^{-3}$ mole de $TDA_1$. | ┘ | |

durée de reflux est égale à 3 heures.

On obtient 16,2 g de polymère qui se présente sous la forme d'une huile semi-solide.

$r'_2$, défini dans les exemples 2 à 4, est égale à 0,52.

Les caractéristiques du polymère obtenu sont :

$\overline{Mn}$ = 860
$\overline{Mw}$ = 8710
Ip = 10,13

EXEMPLE 7 :

Le mode opératoire est identique à celui de l'exemple 6, on introduit à la place de $TDA_1$, $9{,}66.10^{-3}$ mole de "15 Crown 5" (2,13 g), le rapport massique de "15 Crown 5" sur le sodium étant égal à celui de "$TDA_1$" sur le sodium de l'exemple 6.

$r_1$ = 0,016
$r_2$ = 3,26

On récupère 17,7 g de polymère se présentant sous la forme d'une huile visqueuse.

$r'_2$, défini dans les exemples 2 à 4, est égal à 0,52.

Les caractéristiques du polymère obtenu sont :

$\overline{Mn}$ = 770
$\overline{Mw}$ = 4630
Ip = 6,01

EXEMPLE 8 :

Le mode opératoire est identique à celui de l'exemple 6, on introduit à la place de $TDA_1$, $8{,}6.10^{-3}$ mole de composé (A) (cyclame) (2,13 g), le rapport massique du cyclame utilisé sur le sodium étant égal à celui de "$TDA_1$" sur le sodium de l'exemple 6.

$r_1$ = 0,014
$r_2$ = 3,26

On récupère 18,8 g de polymère se présentant sous la forme d'une huile visqueuse.

$r'_2$, défini dans les exemples 2 à 4, est égal à 2,90.

Les caractéristiques du polymère obtenu sont :

$\overline{Mn}$ = 710
$\overline{Mw}$ = 7090
Ip = 9,99

EXEMPLE 9 :

Le mode opératoire est identique à celui de l'exemple comparatif 1, on introduit à la place du dioxane du $TDA_1$.

Les quantités des produits sont :

$MeViSiCl_2$ : 0,120 mole ┐ $r_2 = 1$
$MeHSiCl_2$ : 0,120 mole ┘

$Me_3SiCl$ : 0,093 mole

0,596 mole de métal sodium ┐ $r_1 = 0,011$
$6,59.10^{-3}$ mole de $TDA_1$ (2,13 g) ┘

durée de reflux est égale à 2 heures.

On obtient 13,31 g de polymère se présentant sous la forme d'une huile très visqueuse. $r'_2$, défini dans les exemples 2 à 4, est égal à 0,19.

Les caractéristiques du polymère obtenu sont :

$\overline{Mn} = 1040$
$\overline{Mw} = 21950$
Ip = 21

EXEMPLE 10 :

Dans un réacteur en verre de 1 litre, maintenu sous atmosphère d'azote, muni d'une agitation mécanique, d'un réfrigérant à eau, d'un thermomètre et chauffé par bain d'huile, on introduit 300 ml de toluène, 0,015 mole de $TDA_1$ et 1,47 mole de sodium. On porte à reflux sous forte agitation afin de former des billes de sodium. On ajoute en 1 heure 30 minutes dans le solvant au reflux un mélange constitué de :

$Me_3SiCl$ : 0,2 mole
$MeViSiCl_2$ : 0,2 mole $r_2 = 1$ ; $r_3 = 0,33$
$MeHSiCl_2$ : 0,2 mole
$Me\varnothing SiCl_2$ : 0,2 mole
$r_1 = 0,01$

En fin d'addition, le mélange réactionnel est laissé à reflux pendant 4 heures, puis refroidi et filtré sous atmosphère inerte.

Le précipité est lavé avec 200 ml de toluène et la filtrat est lavé deux fois avec de l'eau, puis décanté est séché sur $MgSO_4$.

Après évaporation du solvant, on récupère 51,3 g d'une huile visqueuse qui a comme caractéristiques :

$\overline{Mn} = 806$
$\overline{Mw} = 7269$
Ip = 9

Les rapports molaires obtenus par analyses $^1H$ NMR et $^{29}Si$ NMR du polymère sont :

≡Si-Me / ≡Si-H / ≡Si-Vi / ≡ Si-∅ = 81,7 / 3,0 / 2,0 / 13,3

EXEMPLE 11 :

Le mode opératoire est identique à celui de l'exemple 10, sauf que l'on introduit à la place de $Me0SiCl_2$ :

$Me(nBu)SiCl_2$ : 0,2 mole
$r_1 = 0,01$ ; $r_2 = 1$ ; $r_3 = 0,33$

On obtient 50,4 g d'une huile visqueuse qui a comme caractéristiques :

$\overline{Mn} = 790$
$\overline{Mw} = 2132$
Ip= 2,7

Les rapports molaires obtenus par analyses $^1HNMR$ et $^{29}SiNMR$ du polymère sont :

≡ Si-Me / ≡ Si-H / ≡ Si-Vi / ≡ Si-nBu = 74,62 / 7,62 / 1,01 /16,76

**Revendications**

1° - Procédé de préparation de polycarbosilanes par réaction d'au moins un de chacun des deux silanes monomères de formules :

$$R^1R^2\,SiCl_2 \quad (1)$$

$R^1{}_3SiCl$ (2)

dans lesquelles $R^1$ identique ou différent représente l'atome d'hydrogène ou un radical hydrocarboné, $R^2$ est le radical vinyle, procédé caractérisé en ce que il est mis en oeuvre en présence de métal sodium fondu dans un solvant organique et d'agents séquestrants de telle sorte que le rapport $r_1$ du nombre de moles d'agents séquestrants sur le nombre de moles de sodium soit compris entre 0,001 et 1.

**2°** - Procédé selon la revendication 1 caractérisé en ce que $r_1$ est compris entre 0,01 et 0,05.

**3°** - Procédé selon l'une quelconque des revendications précédentes caractérisé en ce que il est mis en oeuvre, avec à titre de troisième réactif, au moins un chlorosilane monomère de formule générale (4) : $R^1$ H $SiCl_2$, dans laquelle $R^1$ identique ou différent représente l'atome d'hydrogène ou un radical hydrocarboné.

**4°** - Procédé selon la revendication 3 caractérise en ce qu'il est mis en oeuvre avec, à titre de quatrième réactif, au moins un chlorosilane monomère de formule générale (7) : $R^1R^9SiCl_2$, dans laquelle $R^1$ identique ou différent représente l'atome d'hydrogène ou un radical hydrocarboné, $R^9$ identique ou différent représente un radical alkyle, un radical cycloalkyle, un radical aryle, un radical arylalkyle ou alkylaryle.

**5°** - Procédé selon la revendication 4 caractérisé en ce que $R^9$ représente un radical alkyle en $C_3$ - $C_6$, le radical cyclohexyle ou le radical phényle.

**6°** - Procédé selon l'une quelconque des revendications 3 à 5 caractérisé en ce que le rapport $r_2$, correspondant au nombre de moles de chlorosilanes de formule (1) sur le nombre de moles d'hydrogénochlorosilanes de formule (4), est compris entre 0,5 et 4 et le rapport $r_3$, correspondant au nombre de moles de monochlorosilanes introduits sur le nombre de moles de dichlorosilanes introduits, est compris entre 0,2 et 0,8.

**7°** - Procédé selon l'une quelconque des revendications précédentes caractérisé en ce que $R^1$ représente le radical méthyl.

**8°** - Procédé selon l'une quelconque des revendications précédentes caractérisé en ce que les agents séquestrants sont choisis parmi les composés complexants de formule :

$$N \text{---} [\text{---} CHR^3\text{-}CHR^3\text{-}O(CHR^3\text{-}CHR^3\text{-}O)_n - R^4]_3 \quad (3)$$

dans laquelle n est un nombre entier compris entre 0 et 10 inclus ; $R^3$ identique ou différent est choisi parmi un atome d'hydrogène et un radical alkyl en $C_1$-$C_4$ et $R^4$ est un radical choisi parmi un radical alkyle ou cycloalkyle en $C_1$-$C_{12}$, un radical alkylphényle ou phénylalkyle dont la partie alkyle est en $C_1$-$C_{12}$.

**9°** - Procédé selon l'une quelconque des revendications 1 à 7 caractérisé en ce que les agents séquestrants sont choisis parmi les polyéthers macrocycliques ayant de 15 à 30 atomes dans leur cycle et constitués de 4 à 10 unités -O-X dans lesquelles X est soit $-CHR^5-CHR^5$, soit $-CHR^5-CHR^5-C(R^6)_2$, $R^5$ et $R^6$ identiques ou différents étant un atome d'hydrogène ou un radical alkyle ayant de 1 à 4 atomes de carbone, un des X pouvant être $-CHR^5-CHR^5-C(R^6)_2$ quand les unités -O-X comprennent le groupement $-O-(CHR^5)_2$.

**10°** - Procédé selon l'une quelconque des revendications 1 à 7 caractérisé en ce que les agents séquestrants sont choisis parmi les composés macrocycliques ou bicycliques de formule générale (5) ou (6) :

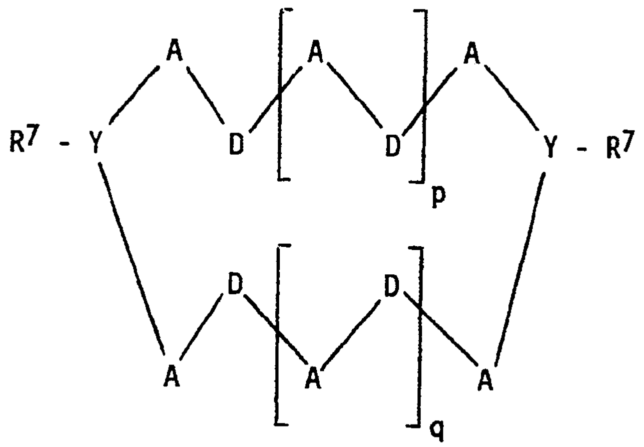

(5)

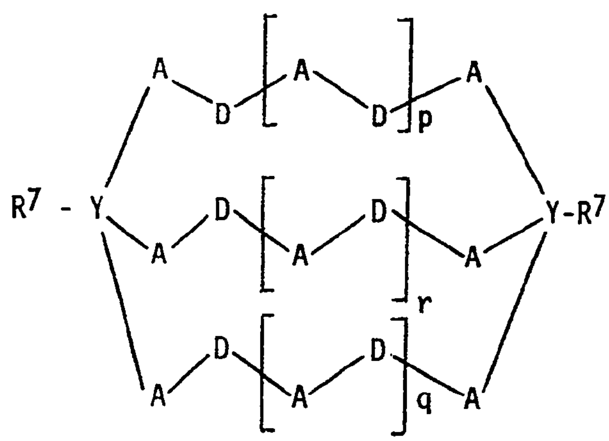

(6)

dans lesquelles :

– Y représente N ou P

– A représente un groupement alkylène ayant de 1 à 3 atomes de carbone

– D représente O, S ou N-$R^8$ où $R^8$ représente un radical alkyle ayant de 1 à 6 atomes de carbone

– $R^7$ représente un radical alkyle ayant de 1 à 6 atomes de carbone, p, q et r identiques ou différents sont des nombres entiers compris entre 1 et 5.

**11°** - Procédé selon l'une quelconque des revendications 1 à 7, caractérisé en ce que l'agent séquestrant est le composé 1,4,8,11-tétraméthyl 1,4,8,11-tétraazacyclotétradécane, de formule :

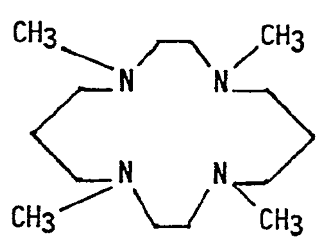

**12°** - Procédé selon la revendication 8 caractérisé en ce que l'agent séquestrant est la tris(dioxa-3,6 heptyl)amine.

**13°** - Procédé selon la revendication 9 caractérisé en ce que l'agent sequestrant est l'éther couronne de formule.

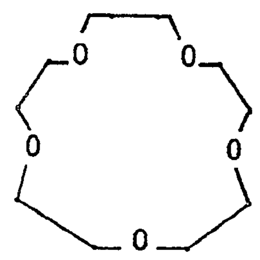

**14°** - Procédé selon l'une quelconque des revendications précédentes caractérisé en ce que le métal sodium est de 5 à 10 % en excès molaire par rapport aux groupes chlorosilanes introduits.

**15°** - Procédé selon l'une quelconque des revendications précédentes caractérisé en ce que le mélange obtenu par le procédé selon l'une quelconque des revendications précédentes est refoidi, puis filtré, la phase solide de cette filtration étant traitée par addition d'eau ou d'alcool pour oxyder le sodium résiduel.

**16°** - Procédé selon l'une quelconque des revendications précédentes caractérisé en ce que le solvant est aprotique et apolaire.

**17°** - Procédé selon la revendication 16 caractérisé en ce que le solvant est le toluène.

**18°** - Procédé selon l'une quelconque des revendications précédentes caractérisé en ce que les polymères obtenus sont ultérieurement traités thermiquement entre 150 et 400°C.

**19°**- Procédé selon l'une quelconque des revendications précédentes caractérisé en ce que l'on pyrolyse les polymères sous vide ou dans une atmosphère inerte ou réductrice à une température allant de 100 à 2000°C.

**20°** - Procédé selon la revendication 19, caractérisé en ce que préalablement à ladite pyrolyse, ledit polymère est mis sous une forme choisie parmi une fibre, une pellicule, une matrice, un revêtement.

**21°** - Produit céramique à base de carbure ou carbonitrure de silicium susceptible d'être obtenu selon un procédé tel que défini aux revendications 19 et 20.

FIGURE